# EUROPÄISCHE PATENTSCHRIFT

(11) **EP 4 155 244 B1**
(45) Veröffentlichungstag und Bekanntmachung des Hinweises auf die Patenterteilung: **17.07.2024**
(21) Anmeldenummer: 22190455.0
(22) Anmeldetag: 16.08.2022
(51) Int. Cl.: B65G 53/10, B27N 3/14, B27N 3/02, B27N 3/04

(54) **WINDSTREUVORRICHTUNG UND STREUGUTANLAGE**
WIND SCATTERING DEVICE AND SCATTERING APPARATUS
DISPOSITIF D'ÉPANDAGE PAR SOUFFLERIE ET INSTALLATION D'ÉPANDAGE DE MATIÈRE À ÉPANDRE

(30) Priorität: 24.09.2021 DE 102021124789
(43) Veröffentlichungstag der Anmeldung: 29.03.2023
(73) Patentinhaber: Siempelkamp Maschinen- und Anlagenbau GmbH, 47803 Krefeld (DE)
(72) Erfinder: Schürmann, Klaus, 41363 Jüchen (DE); Aengenvoort, Dieter, 47652 Weeze (DE); Zimmer, Sven, 41372 Niederkrüchten (DE)
(74) Vertreter: Andrejewski - Honke Patent- und Rechtsanwälte Partnerschaft mbB

(56) Entgegenhaltungen:
- DE-A1- 102015 112 013
- DE-B- 1 065 164

## Beschreibung

Die Erfindung betrifft eine Windstreuvorrichtung zum Streuen von Streugut bzw. zum Aufstreuen von Streugut auf einen Streugutförderer, mit zumindest einer Windstreukammer, welche eine obere Streugutöffnung aufweist, über die Streugut in die Windstreukammer eingebracht wird und mit mehreren Ventilatoren zur Erzeugung zumindest eines Luftstroms für die Separierung des Streugutes in der Windstreukammer, wobei der von den Ventilatoren erzeugte Luftstrom über eine Einströmöffnung, die eine Einströmfläche definiert, in die Windstreukammer eintritt, wobei sich die Einströmfläche entlang der Höhe der Windstreukammer erstreckt und z.B. vertikal oder im Wesentlichen vertikal orientiert ist.

Eine solche (Wind-)Streuvorrichtung wird in der Regel in eine Streugutanlage für die Erzeugung von Streugutmatten für die Herstellung von Werkstoffplatten, insbesondere Holzwerkstoffplatten integriert. Holzwerkstoffplatten meint insbesondere Spanplatten aus Holzspänen oder alternativ Faserplatten aus Holzfasern. Grundsätzlich werden aber auch andere Werkstoffplatten von der Erfindung umfasst. Die auf den Streugutförderer (z.B. Streubandförderer) aufgestreuten Streugutmatten werden z.B. in einer Presse, beispielsweise einer kontinuierlich arbeitenden Presse oder auch einer Taktpresse, unter Anwendung von Druck und/oder Wärme zu Werkstoffplatten, z.B. Holzwerkstoffplatten verpresst. Die Qualität der hergestellten Platten, z.B. Holzwerkstoffplatten, hängt maßgeblich von der Qualität bzw. den Eigenschaften der mit Hilfe der Streuvorrichtung erzeugten Streugutmatten ab. Bei dem Streugut handelt es in der Regel um beleimtes des Streugut, z.B. beleimte Späne oder alternativ auch beleimte Fasern, die z.B. aus einem Streugutbunker bzw. Dosierbunker der Streuvorrichtung zugeführt werden können.

Dabei kann eine Streugutanlage mehrere Streuvorrichtungen aufweisen, die auch als Streuköpfe bezeichnet werden, z.B., wenn mehrschichtige Streugutmatten aus (zwei) Deckschichten (aus z.B. feinem Material) und z.B. einer Mittelschicht (aus z.B. grobem Material) erzeugt werden sollen. Die einzelnen Streuvorrichtungen sind bei der Herstellung mehrschichtiger Matten entlang der Förderrichtung des Streubandförderers hintereinander angeordnet, so dass zunächst eine erste Deckschicht auf den Streubandförderer aufgestreut wird, anschließend eine oder mehrere Mittelschichten auf diese erste Deckschicht und dann wiederum eine zweite Deckschicht auf die Mittelschicht bzw. die Mittelschichten. Die erfindungsgemäße Windstreuvorrichtung kann z.B. der Erzeugung von Deckschichten innerhalb einer solchen Streugutanlage dienen. Denn durch den in der Windstreukammer erzeugten Luftstrom erfolgt in der Windstreukammer eine Separierung der Späne, wobei gröbere Späne in der Nähe der Einströmfläche abfallen und feinere Späne im hinteren Bereich, d.h. in dem der Einströmfläche abgewandten Bereich der Windstreukammer herabfallen. Auf diese Weise lassen sich - je nach Ausrichtung der Streuvorrichtung bezogen auf die Transportrichtung des Streubandförderers - Schichten, z.B. Deckschichten erzeugen, deren Spangröße in Richtung zur Oberfläche der Matte variiert, z.B. feiner wird. In der Windstreukammer können optional ein oder mehrere Siebe angeordnet sein, um die Separierung zu optimieren.

In der Praxis werden z.B. Windstreuvorrichtungen der eingangs beschriebenen Art eingesetzt, bei denen die für die Windsichtung notwendige Strömung bzw. der Luftstrom durch ein gemeinsames Lufterzeugungssystem mit einem oder mehreren leistungsstarken Ventilatoren erzeugt wird. Die von dem oder den Ventilatoren erzeugte Strömung wird in eine Vorkammer geleitet, in der ein Staudruck erzeugt wird. Von dieser Staudruckkammer führen einzelne Ableitungsrohre die Strömung in die eigentliche Windstreukammer. Die Ableitungsrohre können durch Blenden in ihrer jeweiligen Menge reguliert werden. Damit besteht die Möglichkeit, eine möglichst homogene Verteilung der Windgeschwindigkeiten über den gesamten Querschnitt der Windstreukammer zu erzeugen.

Eine derartige Windstreuvorrichtung wird z.B. in der DE 10 2015 112 013 A1 beschriebenen. Im Bereich der Einströmfläche in die Windstreukammer ist eine Düseneinheit vorgesehen, die eine Vielzahl von in Spalten und Reihen angeordneten Auslassdüsen aufweist, wobei sich die Auslassdüsen jeweils in Strömungsrichtung trichterförmig von einem rechteckigen Eingangsquerschnitt in einen runden oder ovalen Ausgangsquerschnitt verjüngen. Der Düseneinheit kann eine Registereinheit in Strömungsrichtung nachgeordnet sein, die nebeneinander mehrere Registerstreifen aufweist, welche jeweils über die Höhe verteilt mehrere den Auslassdüsen zugeordnete Öffnungen aufweisen und zur Einstellung variabler Auslassquerschnitte der Düseneinheit höhenverstellbar sind. Auch bei dieser Ausführungsform sind einige wenige großdimensionierte Ventilatoren vorgesehen, die jeweils vertikal orientierte Luftströme erzeugen, wobei das Luftzuführungsgehäuse als Umlenkgehäuse mit zumindest einem vertikalen Gehäuseabschnitt, einem horizontalen Gehäuseabschnitt und einem dazwischen angeordneten Umlenkabschnitt ausgebildet ist. Dabei können zumindest vier Ventilatoren vorgesehen sein, von denen - jeweils unter Zwischenschaltung einer Umlenkstrecke - zwei Ventilatoren einem oberen Bereich der Düseneinheit und zwei Ventilatoren einem unteren Bereich der Düseneinheit zugeordnet sind.

Solche Windstreuvorrichtungen haben sich in der Praxis grundsätzlich bewährt, sie sind jedoch weiterentwicklungsfähig - hier setzt die Erfindung ein.

Im Übrigen wird in der DE 1 205 274 B eine Formstation für die Erzeugung von Streugutmatten im Zuge der Herstellung von Holzwerkstoffplatten beschrieben, bei der die Streupartikel über ein Förderband zu einer Abwurfstelle transportiert werden und wobei im Weg der Streupartikel von dieser Abwurfstelle zu dem Streugutförderer, auf dem die Matte erzeugt wird, entweder ein oder mehrere Schwingrahmen oder eine oder mehrere Spezialwurfwalzen oder eine oder mehrere Wirbelwinddüsen oder eine Kombination dieser Aggregate vorgesehen sind, über die bzw. an denen vorbei die von der Wurfstelle kommenden Streupartikel zur Orientierung im Wesentlichen verschiedenen Richtungen passieren müssen. Zur Erzeugung einer Luftwirbelung können Winddüsen vorgesehen sein.

Der Erfindung liegt die Aufgabe zugrunde, eine Windstreuvorrichtung und eine Streugutanlage mit einer solchen Windstreuvorrichtung zu schaffen, mit der sich in wirtschaftlicher Weise Streugutmatten in hoher Qualität herstellen lassen und die sich zugleich durch einen kompakten und wirtschaftlichen Aufbau auszeichnet.

Zur Lösung dieser Aufgabe lehrt die Erfindung eine Windstreuvorrichtung mit den Merkmalen des Anspruchs 1. Dazu sind die Ventilatoren des Ventilatorfeldes, vorzugsweise sämtliche Ventilatoren des Ventilatorfeldes, z.B. in einer gemeinsamen Ventilatorebene angeordnet, wobei diese Ventilatorebene senkrecht zu den von den Ventilatoren erzeugten Einzelströmen orientiert ist und wobei diese Ventilatorebene bevorzugt parallel oder im Wesentlichen parallel zu der Einströmfläche der Windstreukammer orientiert ist. Es sind folglich eine Vielzahl von einzelnen Ventilatoren vorgesehen, die gemeinsam ein Ventilatorfeld bilden, wobei die einzelnen Ventilatoren jeweils Einzelströme erzeugen, die gemeinsam den Luftstrom innerhalb der Windstreukammer bilden. Dabei sind die Ventilatoren bevorzugt derart positioniert, dass die Strömungsrichtung der von den Ventilatoren jeweils erzeugten Einzelströme parallel oder in Wesentlichen parallel zu der Einströmrichtung des an der Einströmfläche in die Windstreukammer eintretenden Luftstromes ist. Die von den Ventilatoren erzeugten Einzelströme treten folglich ohne Richtungsumlenkung in die Einströmfläche bzw. in die Windstreukammer ein.

Die Erfindung geht dabei von der Erkenntnis aus, dass sich eine Windstreuvorrichtung mit kompaktem Aufbau und hervorragenden Strömungsverhältnissen sehr wirtschaftlich konzipieren lässt, wenn der Luftstrom nicht mit einigen wenigen Ventilatoren mit hoher Leistung erzeugt wird, sondern wenn ein Ventilatorfeld mit einer Vielzahl von Ventilatoren eingesetzt wird, die jeweils eine verhältnismäßig kleine Leistung aufweisen können und sich daher durch einen besonders kompakten Aufbau auszeichnen. Die Ventilatoren werden nicht mehr so orientiert, dass sie vertikale Luftströmungen erzeugen, die über eine Umlenkkammer in den Bereich der Einströmfläche geleitet werden, sondern das Ventilatorfeld erzeugt mit den einzelnen Ventilatoren sogleich eine Vielzahl von Einzelströmen, die bereits in der Richtung des in die Windstreukammer eintretenden Luftstromes orientiert sind, so dass auf eine Richtungsumlenkung verzichtet wird. Dadurch kann die im Stand der Technik eingesetzte Staukammer entfallen. Die Luft wird direkt von den Ventilatoren angesaugt und über die Einströmfläche in die Windstreukammer gedrückt, ohne dass von der Erzeugung der Einzelströme bis zum Eintritt über die Einströmfläche in die Windstreukammer eine Richtungsumlenkung des Luftstroms erforderlich ist.

Das Ventilatorfeld weist mehrere, z.B. zumindest drei, vorzugsweise zumindest vier über die Höhe verteilte Ventilatoren und mehrere, z.B. zumindest drei, vorzugsweise zumindest vier über die Breite verteilte Ventilatoren auf, so dass z.B. vier Ventilatoren über die Höhe und sechs Ventilatoren über die Breite verteilt sein können. Insgesamt weist das Ventilatorfeld z.B. zumindest neun Ventilatoren, vorzugsweise zumindest zwölf Ventilatoren, besonders bevorzugt zumindest sechzehn Ventilatoren, z.B. vierundzwanzig Ventilatoren oder mehr auf.

Die Ventilatoren können schachbrettartig und folglich in Reihen und Spalten angeordnet sein. Es besteht aber auch die Möglichkeit, die einzelnen Ventilatoren bezogen auf die Höhe und Breite versetzt zueinander anzuordnen. Stets ist es zweckmäßig, wenn die Ventilatoren in einer gemeinsamen Ebene angeordnet sind. Alternativ können die Ventilatoren aber auch bezogen auf die Strömungsrichtung nach vorne und hinten versetzt zueinander angeordnet sein.

Besonders bevorzugt erstreckt sich das Ventilatorfeld über die gesamte Höhe und/oder über die gesamte Breite der Einströmfläche. Diese Einströmfläche kann z.B. von einer Einströmöffnung in der Windstreukammer bzw. in dem Gehäuse der Windstreukammer gebildet werden, wobei diese Öffnung eine vorgegebene Höhe und eine vorgegebene Breite aufweist. Bevorzugt entsprechen Höhe und Breite des Ventilatorfeldes im Wesentlichen der Höhe und Breite einer solchen rechteckigen Einströmöffnung, die z.B. in einer vertikal oder in etwa vertikal orientierten Gehäusewand der Windstreukammer angeordnet sein kann.

Ein wesentlicher Vorteil der erfindungsgemäßen Ausgestaltung ist, dass nicht mit einigen wenigen Hochleistungsventilatoren große Luftströme erzeugt werden, sondern dass eine Vielzahl, kostengünstiger Einzelventilatoren mit verhältnismäßig geringer Leistung eingesetzt werden können, die sich nicht nur durch geringe Anschaffungs- und Betriebskosten, sondern auch durch einen kompakten Aufbau auszeichnen. So können z.B. Einzelventilatoren eingesetzt werden, die einen maximalen Volumenstrom bzw. ein maximales Fördervolumen von bis zu 3000 m³/h, z.B. maximal 2000 m³/h, besonders bevorzugt maximal 1500 m³/h aufweisen. Die einzelnen Ventilatoren bzw. deren Ventilatorgehäuse können verhältnismäßig gering dimensioniert sein und z.B. eine Gehäusebreite und/oder eine Gehäusehöhe von maximal 400 mm, z.B. maximal 300 mm aufweisen. Die Tiefe der Ventilatoren bzw. des Ventilatorgehäuses entlang der Strömungsrichtung kann z.B. maximal 400 mm, vorzugsweise maximal 300 mm betragen.

Bevorzugt sind die Ventilatoren als Axialventilatoren ausgebildet, deren Drehachsen senkrecht zur Einströmfläche der Windstreukammer und/oder senkrecht zur Streugutströmung des in die Streugutkammer eintretenden Streugutes orientiert sind.

In einer bevorzugten Ausführungsform ist außerdem eine Diffusoreinheit vorgesehen, die eine Vielzahl von Diffusoren aufweist, die z.B. in Spalten und Reihen angeordnet sind. Die einzelnen Diffusoren sind jeweils mit einem runden oder ovalen Eingangsquerschnitt und einem rechteckigen Ausgangsquerschnitt ausgestaltet, wobei die Ventilatoren jeweils an den runden oder den ovalen Eingangsquerschnitt angeschlossen sind und wobei die Ausgangsquerschnitte der Diffusoren eine ebene (einheitliche) Diffusoraustrittsfläche bilden, die parallel oder im Wesentlichen parallel zu der Einströmfläche der Windstreukammer orientiert ist oder diese Einströmfläche bildet. An das Ventilatorfeld schließt sich folglich bevorzugt eine solche Diffusoreinheit an. Ventilatoren, z.B. als Axialventilatoren, erzeugen in der Regel zunächst eine Strömung mit rundem Querschnitt. Über die Diffusoreinheit kann eine Verteilung der Einzelströme auf rechteckige Querschnitte und damit auf eine insgesamt einheitliche Einströmfläche erfolgen. Die Ventilatoren sind bevorzugt unmittelbar und ohne Strömungsumlenkung an die Diffusoreinheit angeschlossen oder sie können auch alternativ unmittelbar in die Diffusoreinheit integriert sein. Zur weiteren Optimierung der Strömungsverhältnisse und z.B. Vergleichmäßigung der Strömungsqualität kann dem Ventilatorfeld oder auch der optional vorgesehenen Diffusoreinheit ein Strömungsgleichrichter nachgeordnet sein, der einen in die Windstreukammer eintretenden, homogenen Luftstrom erzeugt. Dieser Strömungsgleichrichter kann z.B. unmittelbar an die Einströmöffnung der Windstreukammer angeschlossen sein, so dass der Strömungsgleichrichter die Einströmfläche der Windstreukammer bildet oder parallel zu der Einströmfläche der Windstreukammer orientiert sein kann. Der Strömungsgleichrichter kann als Lochblech oder auch als Kanalplatte mit einer Vielzahl von Einzelkanälen ausgebildet sein, wobei die Einzelkanäle einen geringeren und vorzugsweise deutlich geringeren Querschnitt aufweisen als der Durchmesser der Ventilatoren und/oder der Durchmesser der Diffusoren.

In einer bevorzugten Ausgestaltung der Erfindung können die einzelnen Ventilatoren innerhalb des Ventilatorfeldes einzeln ansteuerbar sein, z.B. in Abhängigkeit von Messwerten, die z.B. eine Streuverteilung des Streugutes auf dem Streubandförderer repräsentieren. Es ist folglich möglich, mit einer oder mit mehreren Messvorrichtungen das Streuergebnis zu analysieren oder zu überwachen und in Abhängigkeit von diesem Streuergebnis die Strömungsverhältnisse anzupassen, indem einzelne Ventilatoren oder auch sämtliche Ventilatoren des Ventilatorfeldes gezielt angesteuert werden. Die von den Ventilatoren erzeugten Einzelströme können bevorzugt jeweils einzeln einstellbar sein, z.B. durch Variation der Drehzahl der rotierenden Ventilatorelemente und/oder durch Variation der Drehzahl der die Ventilatorelemente antreibenden Antriebe, z.B. Elektromotoren. Die Ventilatoren bzw. die Drehzahl der Ventilatoren oder die Drehzahl der Antriebe kann einzeln steuerbar oder einzeln regelbar sein, vorzugsweise über eine gemeinsame Steuer- oder Regeleinrichtung für das Ventilatorfeld. Bevorzugt werden folglich eine Vielzahl von einzeln drehzahlgeregelten Antrieben vorgesehen, so dass sich die Strömungsverhältnisse im Bereich der Einströmöffnung zielgenau variieren lassen, und zwar auch deshalb, weil die von den Ventilatoren erzeugten Einzelströme ohne Richtungsumlenkung im Wesentlichen unmittelbar im Bereich der Einströmfläche in die Windstreukammer eintreten. Durch Messung der Streuverteilung auf dem Streugutförderer, z.B. Formband, mit der Rückführung des Signals während der laufenden Maschine kann eine Regelung der Einzelventilatoren etabliert und damit die Streugenauigkeit verbessert werden.

Von besonderer Bedeutung ist im Rahmen der Erfindung der Einsatz einer Vielzahl einzelner Ventilatoren, die als kleine Ventilatoren aufgrund der hohen Fertigungsstückzahlen sehr günstig verfügbar sind, so dass sich hohe Strömungsleistungen kostengünstig und sehr effektiv zur Verfügung stellen lassen.

Gegenstand der Erfindung ist auch eine Streugutanlage nach Anspruch 16 mit einer Streuvorrichtung der beschriebenen Art. Die Streugutanlage weist folglich zumindest die Streuvorrichtung sowie einen unterhalb der Streuvorrichtung angeordneten Streugutförderer, z.B. Bandförderer, auf. Das Streugut wird z.B. über eine obere Streugutöffnung in die Windstreukammer eingestreut, wobei bevorzugt oberhalb dieser Windstreukammer ein Streugutbunker vorgesehen ist, mit dem das Streugut zugeführt wird. Alternativ können auch andere Zuführvorrichtungen, z.B. Förderbänder, Förderschnecken oder dergleichen im Bereich der oberen Streugutöffnung vorgesehen sein. Die Streugutanlage weist im Bereich des Streubandförderers bevorzugt eine Messvorrichtung zur Bestimmung oder Überwachung der Streuverteilung des Streugutes auf dem Streubandförderer auf. Ferner kann die Streugutanlage eine Steuer- oder Regeleinrichtung aufweisen, mit der das Ventilatorfeld steuerbar oder regelbar ist, z.B. in Abhängigkeit von Messwerten, die mit der Messvorrichtung aufgenommen werden, wobei - wie beschrieben - vorzugsweise die einzelnen Ventilatoren des Ventilatorfeldes einzeln steuerbar oder regelbar sind. Insbesondere dann, wenn das Ventilatorfeld ausreichend viele Ventilatoren umfasst, lässt sich durch die Regelfähigkeit und folglich Rückkopplung die kritische Wellenlänge einer Störung der erzeugten Matte in Querrichtung ausgleichen.

Im Folgenden wird die Erfindung anhand von Zeichnungen näher erläutert, die lediglich ein Ausführungsbeispiel darstellen. Es zeigen
- Fig. 1: eine erfindungsgemäße Streugutanlage in einer vereinfachten Seitenansicht,
- Fig. 2: einen Ausschnitt aus der Streugutanlage nach Fig. 1 in einer perspektivischen Darstellung und
- Fig. 3: einen vergrößerten Ausschnitt aus dem Gegenstand nach Figur 2.

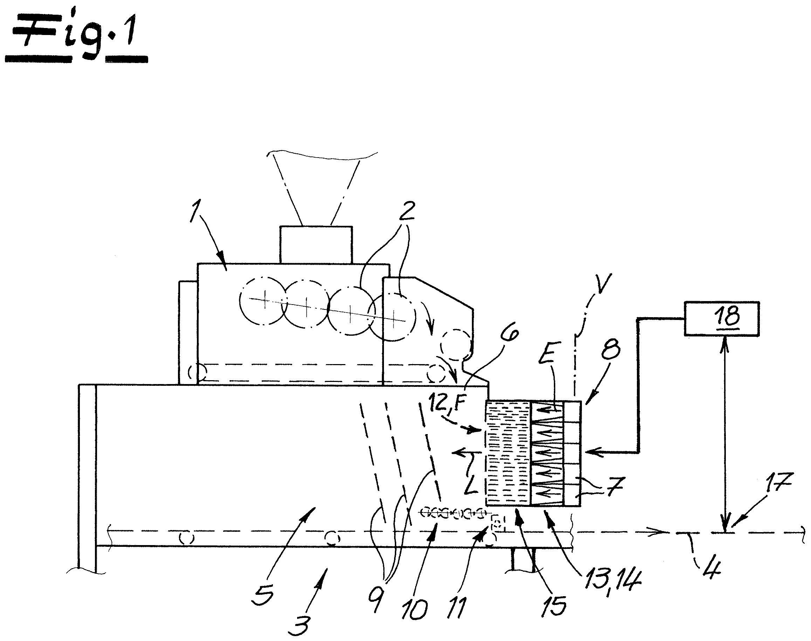

In Fig. 1 ist eine Streugutanlage für die Erzeugung von Streugutmatten für die Herstellung von Holzwerkstoffplatten, z.B. Spanplatten oder Faserplatten, dargestellt. Diese Streugutanlage weist einen Streugutbunker 1 auf, der als Dosierbunker ausgebildet ist und das Streugut z.B. über Streuwalzen bzw. Dosierwalzen 2 an eine Streuvorrichtung 3 abgibt. Mit der Streuvorrichtung 3 wird das Streugut auf den Streubandförderer 4 gestreut, auf dem sich eine Streugutmatte bildet, die anschließend in einer Presse unter Anwendung von Druck und Wärme zu einer Holzwerkstoffplatte, z.B. Spanplatte oder Faserplatte verpresst wird. Eine solche Streugutanlage weist in der Regel mehrere Streuvorrichtungen zur Erzeugung mehrschichtiger Streugutmatten bzw. Streugutmatten mit mehreren Schichten auf, wobei z.B. Deckschichten und eine oder mehrere Mittelschichten gestreut werden. In Fig. 1 ist beispielhaft lediglich ein Bereich mit einer Streuvorrichtung 3 zur Erzeugung einer Schicht, z.B. einer Deckschicht aus verhältnismäßig feinen Spänen dargestellt. Diese Streuvorrichtung 3 ist als Windstreuvorrichtung ausgebildet. Sie weist eine Windstreukammer 5 auf, welche eine obere Streugutöffnung 6 aufweist, über die das Streugut z.B. aus dem Streugutbunker 1 in die Windstreukammer 5 eintritt, und zwar im Ausführungsbeispiel von oben nach unten. Außerdem weist die Streuvorrichtung 3 mehrere Ventilatoren 7 zur Erzeugung eines Luftstroms L für die Separierung des Streugutes in der Windstreukammer 5 auf. Dazu weist die Windstreukammer 5 eine Einströmöffnung 12 auf, die eine senkrechte oder im Wesentlichen senkrechte Einströmfläche F bildet, über die der mit den Ventilatoren 7 erzeugte Luftstrom L in die Windstreukammer 5 eintritt. Die Einströmfläche F erstreckt sich folglich in der Höhenrichtung bzw. entlang der Höhe der Windstreukammer, d.h., z.B. in vertikaler Richtung. Durch den Luftstrom L, der im Ausführungsbeispiel in im Wesentlichen horizontaler Richtung über die Einströmöffnung 12 und folglich durch die Einströmfläche F in die Windstreukammer 5 eintritt, erfolgt die Separierung der Partikel, z.B. Späne, wobei gröbere Partikel in den der Einströmöffnung 12 zugewandten Bereich der Windstreukammer herabfallen und feinere Späne in den der Einströmfläche 12 abgewandten hinteren Bereich der Windstreukammer 5 gelangen und dort herabfallen. Ergänzend können in der Windstreukammer 5 Siebe 9, z.B. Flugspansiebe, optional angeordnet sein, die quer zur Strömungsrichtung angeordnet sind und mit Ventilatoren ausgestattet sein können um z.B. für eine optimale Spanverteilung und eine genaue granulometrische Separierung zu sorgen. Für den Grobgutaustrag kann unterhalb der Flugbahn ein Rollensieb 10 mit Austragsschnecke 11 vorgesehen sein. Alternativ zu der dargestellten Ausführungsform kann jedoch statt des Rollensiebes auch ein Rüttelsieb vorgesehen sein. Über das Rollensieb 10 bzw. ein entsprechendes Rüttelsieb können z.B. Leimklumpen zurückgehalten werden, die dann mit einer Austragsschnecke 11 abgeführt werden können.

Erfindungsgemäß wird auf die beim Stand der Technik vorgesehenen Vorkammern bzw. Staudruckkammern zwischen den Ventilatoren und dem Eintritt in die Windstreukammer verzichtet. Stattdessen sind die Ventilatoren 7 erfindungsgemäß in einem Ventilatorfeld 8 angeordnet, das mehrere über die Höhe und über die Breite verteilte Ventilatoren 7 umfasst, die parallel zueinander orientierte Einzelströme E erzeugen, und zwar im Ausführungsbeispiel in horizontaler Richtung. Das Ventilatorfeld 8 ist folglich derart an die Windstreukammer 5 angeschlossen, dass die Einzelströme E der Ventilatoren 7 senkrecht oder im Wesentlichen senkrecht zur Einströmfläche F der Windstreukammer 5 orientiert sind. Es ist folglich ein sehr kompakt aufgebautes Ventilatorfeld 8 realisiert, das insgesamt quer und folglich bevorzugt senkrecht zur Orientierung des Luftstroms L orientiert ist, der über die Einströmfläche F in die Windstreukammer 5 eingeblasen wird. In dem dargestellten Ausführungsbeispiel sind sämtliche Ventilatoren 7 des Ventilatorfeldes 8 in einer gemeinsamen Ventilatorebene V angeordnet, die parallel oder im Wesentlichen parallel zur Einströmfläche der Windstreukammer 5 orientiert ist. Daraus ergibt sich, dass die Ventilatoren 7 derart positioniert sind, dass die Strömungsrichtung der von den Ventilatoren jeweils erzeugten Einzelströme E parallel zur Einströmrichtung des an der Einströmfläche F in die Windstreukammer 5 eintretenden Luftstroms L ist. Die von den Ventilatoren 7 erzeugten Einzelströme E treten folglich erfindungsgemäß ohne eine Richtungsumlenkung in die Windstreukammer 5 ein. Dazu ist erfindungsgemäß das Ventilatorfeld 8 vorgesehen, in welchem zumindest drei Ventilatoren 7 über die Höhe verteilt sind und zumindest drei Ventilatoren 7 über die Breite verteilt sind. In dem dargestellten Ausführungsbeispiel ist eine 4 × 6-Anordnung realisiert, d.h., es sind vier Ventilatoren 7 über die Höhe verteilt und sechs Ventilatoren 7 über die Breite verteilt, so dass das Ventilatorfeld 8 im Ausführungsbeispiel aus vierundzwanzig Ventilatoren 7 zusammengesetzt ist. Dabei ist es besonders vorteilhaft, wenn sich das Ventilatorfeld 8 über die gesamte Höhe und die gesamte Breite der Einströmfläche F erstreckt, d.h. das Ventilatorfeld ist über die gesamte Einströmfläche bzw. Einströmöffnung der Windstreukammer (matrixartig) angeordnet, so dass in einem sehr kompakten Aufbau ein großflächiger Luftstrom L erzeugt wird und unmittelbar in die Kammer 5 eintritt, ohne dass zwischen den Ventilatoren 7 und der Eintrittsöffnung 12 eine Staudruckkammer und/oder Richtungsumlenkungen für den Luftstrom vorgesehen sind.

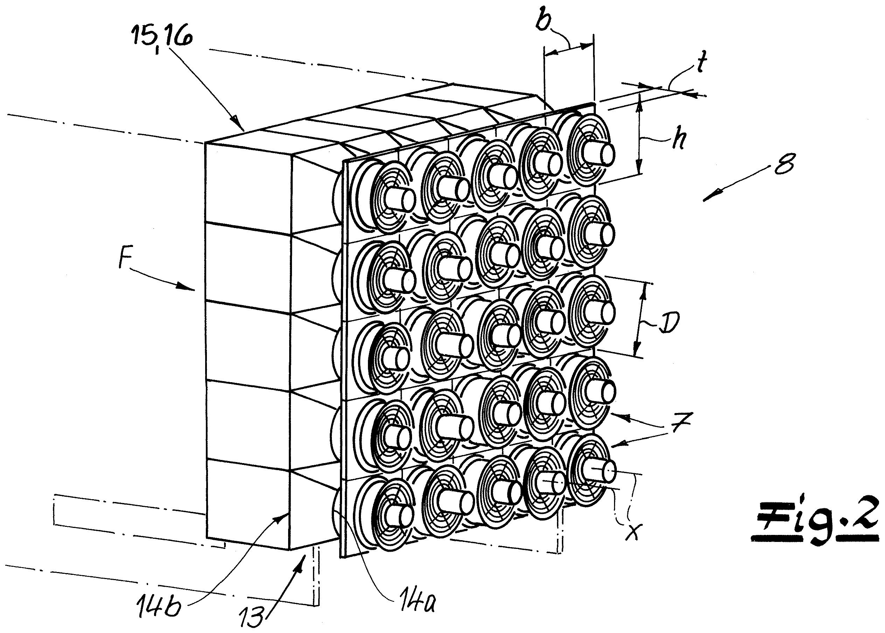

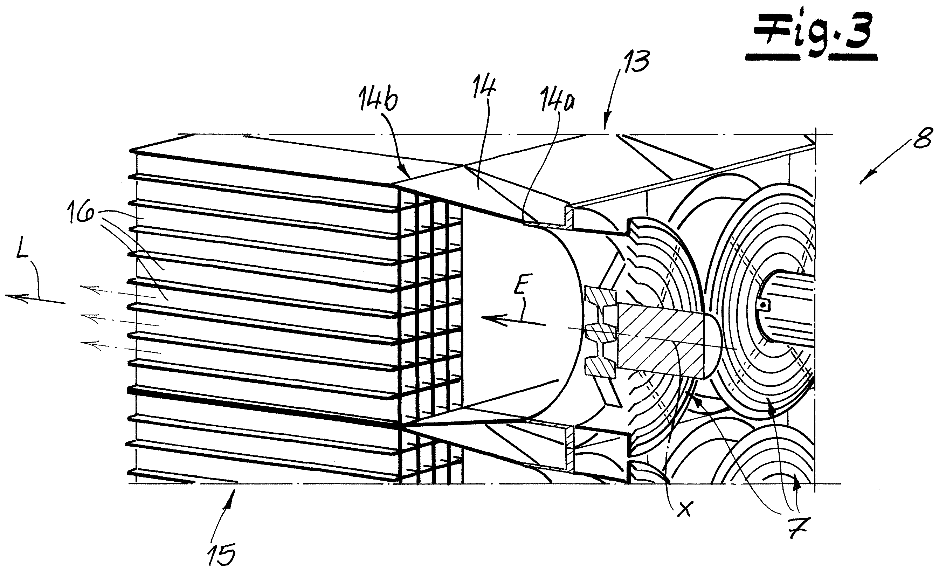

Im Übrigen ist z.B. in Fig. 2 und 3 erkennbar, dass zusätzlich zwischen dem Ventilatorfeld 8 und der Eintrittsöffnung 12 eine Diffusoreinheit 13 vorgesehen ist, die eine Vielzahl von in Spalten und Reihen angeordneten Diffusoren 14 aufweist. Jeder Diffusor 14 weist jeweils einen runden Eingangsquerschnitt 14a und einen rechteckigen Ausgangsquerschnitt 14b auf. Die Ventilatoren 7 sind jeweils an die runden Eingangsquerschnitte 14a angeschlossen, so dass die Einzelströme E über die runden Eingangsquerschnitte 14a in den Diffusor 14 eintreten und über den rechteckigen Ausgangsquerschnitt 14b austreten, so dass über die Ausgangsquerschnitte 14b eine im Wesentlichen einheitliche, ebene Diffusoraustrittsfläche gebildet ist, die parallel oder im Wesentlichen parallel zu der Einströmfläche F der Windstreukammer 5 orientiert ist. Die Ventilatoren 7 sind unmittelbar und ohne Strömungsumlenkung an diese Diffusoreinheit 13 angeschlossen. Optional kann der Diffusoreinheit 13 und folglich auch dem Ventilatorfeld 8 zusätzlich ein Strömungsgleichrichter 15 für die Erzeugung eines in die Windstreukammer eintretenden, homogenen Luftstroms L nachgeordnet sein, welcher die Einströmfläche F der Windstreukammer 5 bildet oder auch parallel zu der Einströmfläche F der Windstreukammer 5 orientiert sein kann. Dieser Strömungsgleichrichter 15 weist im Ausführungsbeispiel eine Vielzahl kleiner Strömungskanäle 16 auf, wobei über die Fläche eines Ventilators 7 und folglich auch über eine einzelne Austrittsfläche 14b des Diffusors 14 eine Vielzahl von Gleichrichterkanälen 16 angeordnet sind. Damit wird die von den Ventilatoren 7 erzeugte Strömung ausgeglichen, so dass eine laminar gerichtete Luftströmung entsteht, die als Luftstrom L in die Kammer 5 eintritt.

In den Figuren ist erkennbar, dass das erfindungswesentliche Ventilatorfeld 8 sehr kompakt aufgebaut ist, denn die einzelnen Ventilatoren 7 können sehr kompakt und mit verhältnismäßig geringer Leistung für die Erzeugung bzw. Förderung eines verhältnismäßig geringen Volumenstroms ausgelegt sein. So können z.B. Ventilatoren mit einem Nenndurchmesser D von etwa 100 mm bis 400 mm, z.B. 200 mm bis 300 mm und im Ausführungsbeispiel etwa 250 mm verwendet werden. Jeder einzelne Ventilator 7 kann einen verhältnismäßig geringen (maximalen) Volumenstrom von z.B. weniger als 2000 m³/h, vorzugsweise weniger als 1500 m³/h erzeugen und auch lediglich für solche Volumenströme ausgelegt sein. Jeder einzelne Ventilator 7 kann dabei eine Höhe h und Breite b von weniger als 300 mm aufweisen, so dass sich das Ventilatorfeld sehr kompakt aus einer Vielzahl von Ventilatoren bilden lässt. Aufgrund der geringen Bautiefe t der einzelnen Ventilatoren von z.B. weniger als 400 mm, vorzugsweise weniger als 300 mm entsteht auch ein Ventilatorfeld mit einer sehr geringen Tiefe und folglich Dicke. Da keine zusätzliche Staudruckkammer und keine weiteren Komponenten rückseitig der Ventilatoren vorgesehen sein müssen, wird insgesamt eine sehr kompakte Bauform und zugleich eine homogene Luftströmung gewährleistet.

Die einzelnen Ventilatoren 7 sind bevorzugt als Axialventilatoren ausgebildet. Die Drehachsen X der Axialventilatoren 7 sind senkrecht zur Einströmfläche F der Windstreukammer 5 orientiert. Bezogen auf die von oben nach unten gerichtete Streugutströmung des in die Windstreukammer 5 eintretenden Streugutes sind die Drehachsen X der Ventilatoren 7 ebenfalls senkrecht oder im Wesentlichen senkrecht orientiert. Die Figuren zeigen, dass ein sehr kompakter Aufbau realisiert ist. Auf eine voluminöse Staudruckkammer wird verzichtet. Die Luft wird direkt von den Ventilatoren 7 angesaugt und in die Kammer 5 gedrückt.

Bevorzugt sind die einzelnen Ventilatoren 7 innerhalb des Ventilatorfeldes 8 einzeln ansteuerbar. Es besteht z.B. die Möglichkeit, über die Steuerung oder Regelung der Drehzahl der Ventilatoren 7 die Förderleistung bzw. den Volumenstrom variabel einzustellen, und zwar für jeden einzelnen Ventilator 7 separat. Auf diese Weise besteht die Möglichkeit, die Strömungsverhältnisse über die Einströmfläche F variabel zu gestalten. Die Steuerung kann bevorzugt in Abhängigkeit von Messwerten erfolgen, die z.B. eine Streuverteilung des Streugutes auf dem Streugutförderer 4 repräsentieren. Dazu kann im Bereich des Streubandförderers eine Messvorrichtung 17 vorgesehen sein, mit der die Streuverteilung des Streugutes auf dem Streugutförderer 4 analysiert werden kann, z.B. eine Dickenmessvorrichtung, mit der die Dicke der Streugutmatte über die Breite analysiert werden kann. In Abhängigkeit von diesen Messwerten kann mit Hilfe einer Steuer- oder Regeleinrichtung 18 die Verteilung der Einzelströme E manipuliert werden, indem die Ventilatoren 7 gezielt angesteuert werden, z.B. über die Drehzahl der Antriebe für die Ventilatoren. Dazu kann eine Steuer- oder Regeleinrichtung 18 sowohl mit der Messeinrichtung 17 als auch mit den Ventilatoren 7 bzw. deren Antrieben verbunden seien.

Durch die Möglichkeit, auf Basis der gemessenen Streuverteilung auf dem Formband 4 durch die Rückführung des Signals während der laufenden Maschine eine Regelung der einzelnen Ventilatoren 7 zu realisieren, besteht die Möglichkeit, die Streugenauigkeit zu verbessern und folglich die Qualität der Streugutmatte zu optimieren.

Von besonderer Bedeutung ist, dass das erfindungsgemäße Ventilatorfeld 8 aus einer Vielzahl von Einzelventilatoren 7 zusammengesetzt ist, die sich durch eine kompakte Bauweise auszeichnen. Solche Axialventilatoren 7 in Kompaktbauweise werden in der Industrie in verschiedensten Bereichen eingesetzt, so dass auf bekannte Komponenten zurückgegriffen werden kann, die kostengünstig zur Verfügung stehen.

## Patentansprüche

1. Windstreuvorrichtung (3) zum Streuen von Streugut auf einen Streugutförderer (4), mit zumindest
einer Windstreukammer (5), welche eine obere Streugutöffnung (6) aufweist, über die Streugut in die Windstreukammer eingebracht wird
und mehreren Ventilatoren (7) zur Erzeugung zumindest eines Luftstroms (L) für die Separierung des Streugutes in der Windstreukammer,
wobei der von den Ventilatoren erzeugte Luftstrom (L) über eine Einströmfläche (F) in die Windstreukammer (5) eintritt, die sich entlang der Höhe der Windstreukammer (5) erstreckt,
**dadurch gekennzeichnet, dass** die Ventilatoren (7) in einem Ventilatorfeld (8) angeordnet sind, das mehrere über die Höhe und mehrere über die Breite des Ventilatorfeldes (8) verteilte Ventilatoren (7) umfasst, die parallel zueinander orientierte Einzelströme (E) erzeugen,
wobei das Ventilatorfeld (8) derart an die Windstreukammer (5) angeschlossen ist, dass die Einzelströme (E) der Ventilatoren (7) senkrecht oder im Wesentlichen senkrecht zu der Einströmfläche (F) der Windstreukammer (5) orientiert sind,
wobei das Ventilatorfeld (8) quer zur Orientierung des über die Einströmfläche (F) in die Windstreukammer (5) eingeblasenen Luftstroms (L) orientiert ist.

2. Vorrichtung nach Anspruch 1, **dadurch gekennzeichnet, dass** die Ventilatoren (bzw. sämtliche Ventilatoren) in einer gemeinsamen Ventilatorebene (V) angeordnet sind, die parallel oder im Wesentlichen parallel zur Einströmfläche (F) der Windstreukammer (5) orientiert ist.

3. Vorrichtung nach Anspruch 1 oder 2, **dadurch gekennzeichnet, dass** die Ventilatoren (7) derart positioniert sind, dass die Strömungsrichtung der von den Ventilatoren (7) jeweils erzeugten Einzelströme (E) parallel zur Einströmrichtung des an der Einströmfläche in die Windstreukammer eintretenden Luftstroms (L) ist.

4. Vorrichtung nach einem der Ansprüche 1 bis 3, **dadurch gekennzeichnet, dass** in dem Ventilatorfeld (8) zumindest drei Ventilatoren, vorzugsweise zumindest vier Ventilatoren über die Höhe und/oder zumindest drei Ventilatoren, vorzugsweise zumindest vier Ventilatoren, über die Breite verteilt sind.

5. Vorrichtung nach einem der Ansprüche 1 bis 4, **dadurch gekennzeichnet, dass** sich das Ventilatorfeld (8) über die gesamte Höhe und/oder gesamte Breite der Einströmfläche (F) und/oder Einströmöffnung (12) erstreckt.

6. Vorrichtung nach einem der Ansprüche 1 bis 5, **gekennzeichnet durch** eine Diffusoreinheit (13), die eine Vielzahl von z.B. in Spalten und Reihen angeordnete Diffusoren (14) aufweist, die jeweils einen runden oder ovalen Eingangsquerschnitt (14a) und einen rechteckigen Ausgangsquerschnitt (14b) aufweisen, wobei die Ventilatoren (7) jeweils an den runden oder ovalen Eingangsquerschnitt (14a) angeschlossen sind und wobei die Ausgangsquerschnitte (14b) eine ebene Diffusoraustrittsfläche bilden, die parallel oder im Wesentlichen parallel zu der Einströmfläche (F) der Windstreukammer (5) orientiert ist oder diese Einströmfläche bildet.

7. Vorrichtung nach Anspruch 6, **dadurch gekennzeichnet, dass** die Ventilatoren (7) unmittelbar und ohne Strömungsumlenkung an die Diffusoreinheit (13) angeschlossen sind oder in die Diffusoreinheit (13) integriert sind.

8. Vorrichtung nach Anspruch 6 oder 7, **dadurch gekennzeichnet, dass** dem Ventilatorfeld (8) oder der Diffusoreinheit (13) ein Strömungsgleichrichter (15) für die Erzeugung eines in die Windstreukammer (5) eintretenden, homogenen Luftstroms (L) nachgeordnet ist, welcher die Einströmfläche (F) der Windstreukammer (5) bildet oder parallel zu der Einströmfläche der Windstreukammer orientiert ist.

9. Vorrichtung nach einem der Ansprüche 6 bis 8, **dadurch gekennzeichnet, dass** jedem Ventilator (7) ein Diffusor (14) zugeordnet ist, z.B. unmittelbar nachgeordnet ist.

10. Vorrichtung nach einem der Ansprüche 1 bis 9, **dadurch gekennzeichnet, dass** die Ventilatoren (7) als Axialventilatoren ausgebildet sind, deren Drehachsen (X) senkrecht zur Einströmfläche (F) der Windstreukammer (5) und/oder senkrecht zur Streugutströmung des in die Windstreukammer eintretenden Streugutes orientiert sind.

11. Vorrichtung nach einem der Ansprüche 1 bis 10, **dadurch gekennzeichnet dass** die einzelnen Ventilatoren (7) innerhalb des Ventilatorfeldes (8) einzeln ansteuerbar sind, z.B. in Abhängigkeit von Messwerten, die z.B. eine Streuverteilung des Streugutes auf dem Streugutförderer (4) repräsentieren.

12. Vorrichtung nach einem der Ansprüche 1 bis 11, **dadurch gekennzeichnet, dass** die von den Ventilatoren (7) erzeugten Einzelströme (E) jeweils einzeln einstellbar sind, z.B. durch Variation der Drehzahl ihrer rotierenden Ventilatorelemente und/oder der die Ventilatorelemente antreiben Antriebe.

13. Vorrichtung nach einem der Ansprüche 1 bis 12, **dadurch gekennzeichnet, dass** die Ventilatoren (7) bzw. die Drehzahl der Ventilatoren oder die Drehzahl der Antriebe einzeln steuerbar oder einzeln regelbar sind, vorzugsweise über eine gemeinsame Steuer- oder Regeleinrichtung (18) für das Ventilatorfeld.

14. Vorrichtung nach einem der Ansprüche 1 bis 13, **dadurch gekennzeichnet, dass** die Ventilatoren (7) ein Ventilatorgehäuse aufweisen, das eine Breite (b) von weniger als 400 mm, vorzugsweise weniger als 300 mm und/oder eine Höhe (h) von weniger als 400 mm, vorzugsweise weniger als 300 mm und/oder eine Tiefe (t) von weniger als 400 mm, vorzugsweise weniger als 300 mm aufweist.

15. Vorrichtung nach einem der Ansprüche 1 bis 14, **dadurch gekennzeichnet, dass** die einzelnen Ventilatoren (7) jeweils für einen Volumenstrom von maximal 3000 m³/h, vorzugsweise maximal 2000 m³/h, z.B. maximal 1500 m³/h ausgelegt sind.

16. Streugutanlage für die Erzeugung von Streugutmatten für die Herstellung von Werkstoffplatten, insbesondere Holzwerkstoffplatten, mit einer Windstreuvorrichtung (3) nach einem der Ansprüche 1 bis 15 und mit zumindest einem Streugutförderer (4), z.B. Streubandförderer, der unterhalb der Windstreuvorrichtung (3) angeordnet ist sowie optional mit einem Streugutbunker (1) oberhalb der Streuvorrichtung.

17. Streugutanlage nach Anspruch 16, **dadurch gekennzeichnet, dass** im Bereich des Streubandförderers (4) eine Messvorrichtung (17) zur Bestimmung oder Überwachung der Streuverteilung des Streugutes auf dem Streubandförderer (4) vorgesehen ist.

18. Streugutanlage nach Anspruch 16 oder 17, **gekennzeichnet durch** eine Steuer- oder Regeleinrichtung (18), mit der das Ventilatorfeld (8) steuerbar oder regelbar ist, z.B. in Abhängigkeit von mit der Messvorrichtung (17) erzeugten Messwerten, wobei vorzugsweise die einzelnen Ventilatoren (7) des Ventilatorfeldes (8) einzelnen steuerbar oder regelbar sind.

## Claims

1. Wind scattering device (3) for the scattering of scattering material onto a scattering material conveyor (4) with at least
a wind scattering chamber (5) which comprises an upper scattering material opening (6) via which the scattering material is introduced into the wind scattering chamber,
and several fans (7) for producing at least one airflow (L) for separating the scattering material in the wind scattering chamber,
wherein the airflow produced by the air flow (L) produced by the fans enters the wind scattering chamber (5) via an inflow surface (F) which extends along the height of the wind scattering chamber (5),
**characterised in that** the fans (7) are arranged in a fan field (8) that comprises several fans (7) distributed over the height and over the width of the fan field (8) which produce individual flows (E) orientated in parallel to each other,
wherein the fan field (8) is connected to the wind scattering chamber (5) in such a way that the individual flows (E) of the fans (7) are orientated perpendicularly or essentially perpendicularly to the inflow surface (F) of the wind scattering device (5),
wherein the fan field (8) is orientated transversely to the orientation of the airflow (L) blown into the wind scattering chamber (5) via the inflow surface (F).

2. Device according to claim 1, **characterised in that** the fans (or all fans) are arranged in a common fan plane (V), which is orientated in parallel or essentially in parallel to the inflow surface (F) of the wind scattering chamber (5).

3. Device according to claim 1 or 2 **characterised in that** the fans (7) are positioned in such a way that the flow direction of the individual flows (E) respectively produced by the fans (7) are in parallel to the inflow direction of the airflow (L) entering the wind scattering chamber at the inflow surface.

4. Device according to any one of claims 1 to 3, **characterised in that** in the fan field (8) at least three fans, preferably at least four fans are distributed over the height and/or at least three fans, preferably four fans over the width.

5. Device according to any one of claims 1 to 4, **characterised in that** the fan field (8) extends over the entire height and/or the entire width of the inflow surface (F) and/or inflow opening (12).

6. Device according to any one of claims 1 to 5 **characterised by** a diffuser unit (13) that comprises a plurality of diffusers (14) arranged, for example, in columns and rows, that each have a round or oval inlet cross-section (14a) and a rectangular outlet cross-section (14b), wherein the fans (7) are each connected to the round or oval inlet cross-section (14a) and wherein the outlet cross-sections (14b) form an level diffuser outlet surface, that is orientated in parallel or essentially in parallel to the inflow surface (F) of the wind scattering chamber (5) or forms this inflow surface.

7. Device according to claim 6, **characterised in that** the fans (7) are directly connected to the diffuser unit (13) without flow deflection or are integrated into the diffuser unit (13),

8. Device according to claim 6 or 7 **characterised in that** arranged downstream of the fan field (8) or the diffuser unit (13) is a flow rectifier (15) for producing a homogeneous airflow (L) entering the wind scattering chamber (5) which forms the inflow surface (F) of the wind scattering chamber (5) or is orientated in parallel to the inflow surface of the wind scattering chamber.

9. Device according to any one of claims 6 to 8, **characterised in that** a diffuser (14) is assigned to each fan (7), e.g. directly downstream thereof.

10. Device according to any one of claims 1 to 9 **characterised in that** the fans (7) are designed as axial fans, the axes of rotation (X) of which are orientated perpendicularly to the inflow surface (F) of the wind scattering chamber (5) and/or perpendicularly to the scattering material flow of the scattering material entering the wind scattering chamber.

11. Device according to any one of claims 1 to 10, **characterised in that** within the fan field (8) the individual fans (7) are individually controllable, e.g. as a function of measuring values, which, for example, represent a scattering distribution of the scattering material on the scattering material conveyor (4).

12. Device according to any one of claims 1 to 11, **characterised in that** the individual flows (E) produced by the fans (7) are each individually adjustable, e.g. by varying the speed of their rotating fan elements and/or the drives driving the fan elements.

13. Device according to any one of claims 1 to 12, **characterised in that** the fans (7) or the speed of the fans or the speed of the drives can be individually controlled or individually regulated, preferably by means of a common control or regulating device (18) for the fan field.

14. Device according to any one of claims 1 to 13, **characterised in that** the fans (7) have a fan housing, that has a width (b) of less than 400 mm, preferably less than 300 mm, and/or a height (h) of less than 400 mm, preferably less than 300 mm, and/or a depth of less than 400 mm, preferably less than 300 mm.

15. Device according to any one of claims 1 to 14, **characterised in that** the individual fans (7) are each designed for a volumetric flow of maximally 3000 m³/h, preferably maximally 2000 m³/h, e.g. maximally 1500 m³/h.

16. Scattering material installation for the production of scattering material mats for the manufacturing of material boards, more particularly wood based boards, with a wind scattering device (3) according to any one of claims 1 to 15 and with at least one scattering material conveyor (4), e.g. scattering conveyor belt, which is arranged underneath the wind scattering device (3), as well as, optionally, with a scattering material bunker (1) above the scattering device.

17. Scattering material installation 16 **characterised in that** provided in the area of the scattering conveyor belt (4) is a measuring device (17) for determining or monitoring the scattering distribution of the scattering material on the scattering conveyor belt (4) .

18. Scattering material installation according to claim 16 or 17, **characterised by** a control or regulating device (18), with which the fan field (8) can be controlled or regulated, e.g. as a function of measuring values produced with the measuring device (17), wherein preferably the individual fans (7) of the fan field (8) can be individually controlled or regulated.

## Revendications

1. Dispositif de dispersion par soufflage (3) pour disperser du matériau de dispersion sur un transporteur pour matériau de dispersion (4), avec au moins
une chambre de dispersion par soufflage (5), laquelle comporte une ouverture pour matériau de dispersion supérieure (6) par laquelle du matériau de dispersion est introduit dans la chambre de dispersion par soufflage,
et plusieurs ventilateurs (7) pour produire au moins un flux d'air (L) pour la séparation du matériau de dispersion dans la chambre de dispersion par soufflage,
sachant que le flux d'air (L) produit par les ventilateurs pénètre par une surface d'entrée (F) dans la chambre de dispersion par soufflage (5), qui s'étend le long de la hauteur de la chambre de dispersion par soufflage (5),
**caractérisé en ce que** les ventilateurs (7) sont disposés dans un champ de ventilation (8), qui comprend plusieurs ventilateurs (7) répartis sur la hauteur et plusieurs sur la largeur du champ de ventilation (8), qui produisent des flux individuels (E) orientés parallèlement les uns aux autres,
sachant que le champ de ventilation (8) est raccordé à la chambre de dispersion par soufflage (5) de telle manière que les flux individuels (E) des ventilateurs (7) sont orientés perpendiculairement ou pour l'essentiel perpendiculairement à la surface d'entrée (F) de la chambre de dispersion par soufflage (5),
sachant que le champ de ventilation (8) est orienté transversalement à l'orientation du flux d'air (L) insufflé par la surface d'entrée (F) dans la chambre de dispersion par soufflage (5).

2. Dispositif selon la revendication 1, **caractérisé en ce que** les ventilateurs (ou tous les ventilateurs) sont disposés dans un plan de ventilateurs commun (V), qui est orienté parallèlement ou pour l'essentiel parallèlement à la surface d'entrée (F) de la chambre de dispersion par soufflage (5).

3. Dispositif selon la revendication 1 ou 2, **caractérisé en ce que** les ventilateurs (7) sont disposés de telle manière que la direction d'écoulement des flux individuels (E) produits respectivement par les ventilateurs (7) se situe parallèlement à la direction d'entrée du flux d'air (L) entrant sur la surface d'entrée dans la chambre de dispersion par soufflage.

4. Dispositif selon l'une quelconque des revendications 1 à 3, **caractérisé en ce qu'**au moins trois ventilateurs, de préférence au moins quatre ventilateurs sont répartis dans le champ de ventilation (8) sur la hauteur et/ou au moins trois ventilateurs, de préférence au moins quatre ventilateurs, sur la largeur.

5. Dispositif selon l'une quelconque des revendications 1 à 4, **caractérisé en ce que** le champ de ventilation (8) s'étend sur toute la hauteur et/ou toute la largeur de la surface d'entrée (F) et/ou de l'ouverture d'entrée (12) .

6. Dispositif selon l'une quelconque des revendications 1 à 5, **caractérisé par** une unité de diffusion (13), qui comporte une pluralité de diffuseurs (14) disposés par exemple en colonnes ou en rangées, qui comportent respectivement une section d'entrée (14a) ronde ou ovale et une section de sortie (14b) rectangulaire, sachant que les ventilateurs (7) sont respectivement raccordés à la section d'entrée (14a) ronde ou ovale et sachant que les sections de sortie (14b) forment une surface de sortie de diffuseur plane, qui est orientée parallèlement ou pour l'essentiel parallèlement à la surface d'entrée (F) de la chambre de dispersion par soufflage (5) ou forme cette surface d'entrée.

7. Dispositif selon la revendication 6, **caractérisé en ce que** les ventilateurs (7) sont raccordés directement et sans déviation d'écoulement à l'unité de diffusion (13) ou sont intégrés dans l'unité de diffusion (13).

8. Dispositif selon la revendication 6 ou 7, **caractérisé en ce qu'**un redresseur de flux (15) pour la production d'un flux d'air (L) homogène, pénétrant dans la chambre de dispersion par soufflage (5) est disposé en aval du champ de ventilation (8) ou de l'unité de diffusion (13), lequel forme la surface d'entrée (F) de la chambre de dispersion par soufflage (5) ou est orienté parallèlement à la surface d'entrée de la chambre de dispersion par soufflage.

9. Dispositif selon l'une quelconque des revendications 6 à 8, **caractérisé en ce qu'**un diffuseur (14) est attribué à chaque ventilateur (7), est par exemple disposé directement en aval.

10. Dispositif selon l'une quelconque des revendications 1 à 9, **caractérisé en ce que** les ventilateurs (7) sont constitués sous la forme de ventilateurs hélicoïdaux, dont les axes de rotation (X) sont orientés perpendiculairement à la surface d'entrée (F) de la chambre de dispersion par soufflage (5) et/ou perpendiculairement à l'écoulement de matériau de dispersion du matériau de dispersion entrant dans la chambre de dispersion par soufflage.

11. Dispositif selon l'une quelconque des revendications 1 à 10, **caractérisé en ce que** les ventilateurs individuels (7) peuvent être actionnés individuellement à l'intérieur du champ de ventilation (8), par ex. en fonction des valeurs de mesure, qui représentent par ex. une répartition de dispersion du matériau de dispersion sur la bande transporteuse à dispersion (4).

12. Dispositif selon l'une quelconque des revendications 1 à 11, **caractérisé en ce que** les débits volumétriques (E) produits par les ventilateurs (7) peuvent être réglés individuellement, par ex. : par la variation de la vitesse de rotation de leurs éléments de ventilation en rotation et/ou des systèmes d'entraînement entraînant les éléments de ventilation.

13. Dispositif selon l'une quelconque des revendications 1 à 12, **caractérisé en ce que** les ventilateurs (7) ou la vitesse de rotation des ventilateurs ou le régime des systèmes d'entraînement peuvent être commandés individuellement ou régulés individuellement, de préférence par un dispositif de commande ou de régulation commun (18) pour le champ de ventilation.

14. Dispositif selon l'une quelconque des revendications 1 à 13, **caractérisé en ce que** les ventilateurs (7) comportent un boîtier de ventilateur, qui comporte une largeur (b) de moins de 400 mm, de préférence de moins de 300 mm et/ou une hauteur (h) de moins de 400 mm, de préférence de moins de 300 mm et/ou une profondeur (t) de moins de 400 mm, de préférence de moins de 300 mm.

15. Dispositif selon l'une quelconque des revendications 1 à 14, **caractérisé en ce que** les ventilateurs individuels (7) sont respectivement conçus pour un débit volumétrique au maximum de 3 000 m³/h, de préférence au maximum de 2 000 m3/h, par exemple au maximum de 1 500 m³/h.

16. Installation pour matériau de dispersion pour la production de nattes en matériau de dispersion pour la fabrication de panneaux à base de matériaux, en particulier de panneaux à base de matériaux dérivés du bois, avec un dispositif de dispersion par soufflage (3) selon l'une quelconque des revendications 1 à 15 et avec au moins un transporteur de matériau de dispersion (4), par ex. : une bande transporteuse à dispersion, qui est disposée en dessous du dispositif de dispersion par soufflage (3) et en option avec un conteneur de matériau de dispersion (1) au-dessus du dispositif de dispersion.

17. Installation pour matériau de dispersion selon la revendication 16, **caractérisée en ce que** dans la zone de la bande transporteuse de dispersion (4), un dispositif de mesure (17) est prévu pour déterminer ou surveiller la répartition de dispersion du matériau de dispersion sur la bande transporteuse de dispersion (4) .

18. Installation pour matériau de dispersion selon la revendication 16 ou 17, **caractérisée par** un dispositif de commande ou de régulation (18) avec lequel le champ de ventilation (8) peut être commandé ou régulé, par exemple en fonction des valeurs de mesure produites avec le dispositif de mesure (17), sachant de préférence que les ventilateurs individuels (7) du champ de ventilation (8) peuvent être réglés ou régulés individuellement.
